# EUROPÄISCHE PATENTSCHRIFT

(11) **EP 3 033 657 B1**
(45) Veröffentlichungstag und Bekanntmachung des Hinweises auf die Patenterteilung: **03.05.2017**
(21) Anmeldenummer: 14748117.0
(22) Anmeldetag: 29.07.2014
(51) Int. Cl.: G06F 3/01, G06F 3/16, G06F 1/16, G06F 3/0484, G02B 27/01

(54) **VERFAHREN ZUM BETREIBEN EINER ELEKTRONISCHEN DATENBRILLE UND ELEKTRONISCHE DATENBRILLE**
METHOD FOR OPERATING ELECTRONIC DATA GLASSES, AND ELECTRONIC DATA GLASSES
PROCÉDÉ POUR FAIRE FONCTIONNER DES LUNETTES ÉLECTRONIQUES INTELLIGENTES ET LUNETTES ÉLECTRONIQUES INTELLIGENTES

(30) Priorität: 16.08.2013 DE 102013013698
(43) Veröffentlichungstag der Anmeldung: 22.06.2016
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2014/002072
(87) Internationale Veröffentlichungsnummer: WO 2015/022052

(56) Entgegenhaltungen:
- EP-A2- 1 271 293
- WO-A1-2013/033842
- DE-A1-102009 037 835
- US-A1- 2010 238 161
- US-A1- 2013 176 208
- US-B1- 7 401 920

## Beschreibung

Die Erfindung betrifft ein Verfahren zum Betreiben einer elektronischen Datenbrille sowie eine elektronische Datenbrille.

Es sind allgemein elektronische Datenbrillen bekannt, welche über eine Anzeigeeinrichtung verfügen, mittels welcher Informationen in ein Sichtfeld eines Trägers der Datenbrille eingeblendet werden können. Dabei ist es möglich, unterschiedlichste Objekte, wie beispielsweise Personen, Gebäude und dergleichen auszuwählen, zu welchen - falls vorhanden - entsprechende Informationen mittels einer derartigen Datenbrille bereitgestellt werden können.

Das Dokument DE 10 2009 037 835 A1 offenbart ein Verfahren zur ergonomischen Darstellung von virtueller Information in einer realen Umgebung, aufweisend die Schritte Bereitstellen wenigstens einer Ansicht einer realen Umgebung und eines Systemaufbaus zum Einblenden von virtueller Information zur Überlagerung mit der realen Umgebung in wenigstens einem Teil der Ansicht, wobei der Systemaufbau wenigstens eine Darstellungsvorrichtung aufweist, Ermitteln einer Position und Orientierung wenigstens eines Teils des Systemaufbaus relativ zu wenigstens einem Bestandteil der realen Umgebung, Unterteilung von wenigstens einem Teil der Ansicht der realen Umgebung in mehrere Bereiche, umfassend einen ersten Bereich und einen zweiten Bereich, wobei Objekte der realen Umgebung innerhalb des ersten Bereichs näher an dem Systemaufbau platziert sind als Objekte der realen Umgebung innerhalb des zweiten Bereichs, und Einblenden von wenigstens einer virtuellen Information auf die Darstellungsvorrichtung in wenigstens einen Teil der Ansicht der realen Umgebung unter Berücksichtigung der Position und Orientierung des wenigstens eines Teils des Systemaufbaus, wobei die virtuelle Information hinsichtlich der Art der Einblendung in die Ansicht der realen Umgebung in dem ersten Bereich anders dargestellt wird als in dem zweiten Bereich.

Das Dokument EP 1 271 293 A2 offenbart eine Benutzerschnittstelle und ein Verfahren zum Bereitstellen der Benutzerschnittstelle. In dem Verfahren wird ein Real-World-Objekt, das in einer Ansicht sichtbar ist, ausgewählt. Der Benutzer kann eine Aktion, die mit einem in der Ansicht angezeigten virtuellen Objekt assoziiert ist, auswählen durch Bewegen der Ansicht und des virtuellen Objekts relativ zu dem Objekt, so dass das Objekt und das virtuelle Objekt miteinander assoziiert werden.
Es ist die Aufgabe der vorliegenden Erfindung, ein Verfahren zum Betreiben einer elektronischen Datenbrille sowie eine Datenbrille bereitzustellen, mittels welchen eine vereinfachte Auswahl von Objekten erfolgen kann.

Diese Aufgabe wird durch ein Verfahren zum Betreiben einer elektronischen Datenbrille sowie durch eine elektronische Datenbrille mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer elektronischen Datenbrille wird erfasst, ob sich ein außenseitig von der Datenbrille angeordnetes Objekt zumindest teilweise in Überdeckung mit einem mittels einer Anzeigeeinrichtung der Datenbrille angezeigten Symbol befindet, dabei das Objekt ausgewählt wird, falls dieses sich zumindest teilweise in Überdeckung mit dem Symbol befindet und zumindest eine vorbestimmte Bedingung erfüllt wird. Durch das erfindungsgemäße Verfahren kann ein Träger der elektronischen Datenbrille somit auf besonders einfache Weise durch das als Auswahlelement dienende Symbol, beispielsweise einem Fadenkreuz oder dergleichen, verschiedenste Objekte, welche außenseitig von der Datenbrille in einer Blickrichtung des Trägers angeordnet sind, auswählen.

Das Symbol dient dabei als eine Art statisches Auswahlelement, wobei ein Träger der Datenbrille über seine Kopfbewegung eine entsprechende Verschiebung eines Bildausschnitts der Anzeigeeinrichtung bewirken kann, um für ihn interessante Objekte mit dem mittels der Anzeigeeinrichtung der Datenbrille angezeigten Symbol in Überdeckung zu bringen und dadurch eine Auswahl des Objektes bewirken zu können. Ein Träger der Datenbrille erhält also über das angezeigte Symbol eine unmittelbare und einfach verständliche Rückkopplung, ob ein gegebenenfalls für ihn interessantes Objekt gerade durch das Symbol anvisiert worden ist, so dass der Träger der Datenbrille, falls er dies wünschen sollte, das entsprechende Objekt, welches er durch eine entsprechende Kopfbewegung in Überdeckung mit dem angezeigten Symbol gebracht hat, auf einfache Weise auswählen kann.

Eine vorteilhafte Ausführungsform der Erfindung sieht vor, dass das Objekt nur dann ausgewählt wird, falls eine vorbestimmte Aktion durch einen Träger der Datenbrille erfasst worden ist. Vorzugsweise handelt es sich bei der vorbestimmten Aktion um einen vorgegebenen Sprachbefehl, ein vorgegebenes Blinzelmuster und/oder eine Betätigung eines vorgegebenen Bedienelements. Der Träger der Datenbrille kann also auf ganz einfache Weise eine Auswahl des Objektes bewirken, indem er beispielsweise einen entsprechenden Sprachbefehl äußert, ein entsprechendes Blinzelmuster durchführt oder einfach ein entsprechendes Bedienelement an der Datenbrille betätigt.

Gemäß einer alternativen Ausführungsform der Erfindung ist es vorgesehen, dass das Objekt automatisch ausgewählt wird, wenn erfasst worden ist, dass sich das Objekt für eine vorgegebene Überdeckungsdauer zumindest teilweise in Überdeckung mit dem Symbol befunden hat. Der Träger der Datenbrille muss also seinen Kopf nur entsprechend für eine vorgegebene Dauer, beispielsweise für 1 Sekunde, 2 Sekunden oder dergleichen, derart ausgerichtet lassen, dass das Symbol zumindest teilweise in Überdeckung mit dem für den Träger der Datenbrille relevanten Objekt bleibt. Durch die daraufhin folgende automatische Auswahl des Objekts ergibt sich eine besonders bequeme und intuitive Auswahl von für den Träger der Datenbrille relevanten Objekten.

In weiterer vorteilhafter Ausgestaltung der Erfindung ist es vorgesehen, dass zur Erfassung, ob sich das Objekt zumindest teilweise in Überdeckung mit dem Symbol befindet, überprüft wird, ob ein innenseitig von der Datenbrille vorgegebener Bereich, das Symbol und das Objekt entlang einer gemeinsamen Geraden angeordnet sind. Bei dem innenseitig von der Datenbrille vorgegebenen Bereich kann es sich beispielsweise um ein Auge oder ein Teil des Auges des Trägers der Datenbrille handeln. Es muss also lediglich überprüft werden, dass beispielsweise das eine Auge des Trägers der Datenbrille, das angezeigte Symbol und das gegebenenfalls für den Träger der Datenbrille interessante Objekt entlang einer gemeinsamen Geraden angeordnet sind. Dadurch kann die Überdeckung des Symbols mit dem Objekt auf besonders einfache Weise festgestellt werden.

In weiterer vorteilhafter Ausgestaltung der Erfindung ist es vorgesehen, dass zur Erfassung, ob sich das Objekt zumindest teilweise in Überdeckung mit dem Symbol befindet, überprüft wird, ob eine Blickrichtung eines Trägers der Datenbrille sowohl auf das Symbol als auch auf das Objekt gerichtet ist. Dafür kann die Datenbrille beispielsweise eine entsprechend geeignete Blickerfassungseinrichtung aufweisen, mittels welcher jederzeit die Blickrichtung des Trägers der Datenbrille erfasst werden kann. Durch einen Abgleich mit der erfassten Blickrichtung des Trägers der Datenbrille in Kenntnis mit der angezeigten Position des Symbols kann auf besonders einfache Weise festgestellt werden, ob das Symbol in Überdeckung mit dem betreffenden Objekt gebracht worden ist. Die Datenbrille kann beispielsweise ein Positionsbestimmungs- oder Navigationsmodul aufweisen, wobei die Ausrichtung der Datenbrille sowie in dem Positionsbestimmungs- oder Navigationsmodul abgespeicherte oder zur Verfügung gestellte Informationen über entsprechende Objekte, wie beispielsweise Gebäude und dergleichen, berücksichtigt werden können.

Eine weitere vorteilhafte Ausführungsform der Erfindung sieht vor, dass, nachdem das Objekt ausgewählt worden ist, eine vorbestimmte Information zu dem ausgewählten Objekt optisch und/oder akustisch wiedergegeben wird. Vorzugsweise wird die vorbestimmte Information dabei nur dann wiedergegeben, falls eine vorbestimmte Handlung des Trägers der Datenbrille erfasst worden ist. Beispielsweise kann es sich dabei um einen entsprechenden Sprachbefehl, eine entsprechende Blinzelbewegung des Trägers und/oder um eine Betätigung einer entsprechend vorgegebenen Bedientaste an der Datenbrille handeln.

Alternativ kann es in weiterer vorteilhafter Ausgestaltung der Erfindung auch vorgesehen sein, dass die vorbestimmte Information automatisch wiedergegeben wird, falls erfasst worden ist, dass sich das Objekt nach dem Auswählen für mindestens eine vorgegebene Dauer, beispielsweise 1 Sekunde, 2 Sekunden oder dergleichen, zumindest teilweise in Überdeckung mit dem Symbol befunden hat. Es erfolgt also eine automatische Ausgabe der betreffenden Information, falls der Träger der Datenbrille seinen Kopf entsprechend für die vorgegebene Dauer derart ausgerichtet gehalten hat, dass das Symbol mit dem betreffenden Objekt zumindest teilweise in Überdeckung gewesen ist.

Eine weitere vorteilhafte Ausführungsform der Erfindung sieht vor, dass ein Verstreichen der vorgegebenen Dauer in Form einer Animation mittels der Anzeigeeinrichtung angezeigt wird. Dadurch wird dem Träger der Datenbrille auf einfache Weise deutlich gemacht, dass sich gerade das Objekt zumindest teilweise in Überdeckung mit dem Symbol befindet, wobei der Träger der Datenbrille anhand der Animation erkennen kann, wie lange er die Datenbrille entsprechend auf das betreffende Objekt ausgerichtet halten muss, bevor die vorbestimmte Information automatisch ausgegeben wird.

In weiterer vorteilhafter Ausgestaltung der Erfindung ist es vorgesehen, dass die vorbestimmte Information nur so lange angezeigt wird, wie erfasst wird, dass sich das Objekt zumindest teilweise in Überdeckung mit dem Symbol befindet. Dadurch wird verhindert, dass gegebenenfalls nicht mehr interessante Informationen rechtzeitig ausgeblendet werden, falls der Träger der Datenbrille nicht mehr an entsprechenden Informationen bezüglich des zuvor anvisierten Objekts interessiert sein sollte.

Gemäß einer weiteren vorteilhaften Ausführungsform der Erfindung ist es vorgesehen, dass das Objekt nur dann ausgewählt wird, falls zu dem Objekt vorbestimmte Informationen vorliegen. Darüber hinaus kann es auch vorgesehen sein, dass das Objekt überhaupt nur auswählbar ist, falls zu dem Objekt vorbestimmte Informationen vorliegen. Bei den vorbestimmten Informationen kann es sich beispielsweise um in einem Datenspeicher der Datenbrille abgespeicherte Informationen oder auch um entsprechende in einer von der Datenbrille verschiedenen Datenbank abgespeicherten Informationen, welche beispielsweise über eine entsprechende Internetverbindung zugänglich sind, handeln. Es wird vorzugsweise also immer überprüft, ob ein gerade mit der Datenbrille anvisiertes Objekt überhaupt in einer oder mehreren Datenbanken hinterlegt ist, auf welchen mit der Datenbrille zugegriffen werden kann. Denn sollten gar keine Informationen zu dem betreffenden Objekt vorliegen, wäre eine entsprechende Auswahl des Objekts auch sinnlos. Entsprechende Objekte in der Umgebung der Datenbrille können beispielsweise mittels der Anzeigeeinrichtung entsprechend hervorgehoben dargestellt, beispielsweise umrandet, farblich hervorgehoben oder auf andere Weise gekennzeichnet werden, zu welchen überhaupt entsprechende Informationen vorliegen. Dadurch wird einem Träger der Datenbrille auf einfache Weise signalisiert, zu welchen Objekten er in seiner Umgebung überhaupt Informationen über die Datenbrille erhalten kann.

Eine weitere vorteilhafte Ausführungsform der Erfindung sieht vor, dass, sobald das Objekt ausgewählt worden ist, eine optische Hervorhebung in einem vorgegebenen Bereich der Anzeigeeinrichtung angezeigt wird. Dadurch kann der Träger der Datenbrille direkt erkennen, dass ein entsprechendes Objekt gerade mittels der Datenbrille fokussiert und ausgewählt worden ist. Anhand dieser Information kann der Träger der Datenbrille beispielsweise entscheiden, ob er überhaupt weiterführende Informationen zu dem gerade ausgewählten Objekt haben möchte oder ob gegebenenfalls fälschlicherweise gar nicht das Objekt ausgewählt worden ist, welches der Träger der Datenbrille überhaupt fokussieren wollte und entsprechende Informationen darüber erhalten wollte.

Eine weitere vorteilhafte Ausführungsform der Erfindung sieht vor, dass, sobald erfasst wird, dass sich das Objekt zumindest teilweise in Überdeckung mit dem Symbol befindet, ein vorgegebener, das Objekt umfassender Bereich mittels der Anzeigeeinrichtung mit einem vorgegebenen Faktor vergrößert angezeigt wird. Mit anderen Worten kann also ein partieller Zoom eines Teils der Umgebung mittels der Anzeigeeinrichtung der Datenbrille erfolgen, so dass der Träger der Datenbrille für ihn gegebenenfalls relevante Umgebungsbereiche zumindest teilweise vergrößert dargestellt bekommt, so dass er in diesem Bereich vorhandene Objekte besser mit dem angezeigten Symbol fokussieren kann. Beispielsweise kann es sich bei dem partiellen Zoom um eine Art Fischaugeneffekt handeln, wodurch ein Teilbereich des für den Träger der Datenbrille relevanten Umgebungsbereichs vergrößert und verzerrt dargestellt werden kann.

Die erfindungsgemäße elektronische Datenbrille umfasst eine Erfassungseinrichtung, welche dazu ausgelegt ist zu erfassen, ob sich ein außenseitig von der Datenbrille angeordnetes Objekt zumindest teilweise in Überdeckung mit einem mittels einer Anzeigeeinrichtung der Datenbrille angezeigten Symbol befindet. Des Weiteren umfasst die elektronische Datenbrille eine Steuereinrichtung, welche dazu ausgelegt ist, das Objekt auszuwählen, falls dieses sich zumindest teilweise in Überdeckung mit dem Symbol befindet und zumindest eine vorbestimmte Bedingung erfüllt wird. Vorteilhafte Ausgestaltungen des erfindungsgemäßen Verfahrens sind dabei als vorteilhafte Ausgestaltungen der elektronischen Datenbrille anzusehen, wobei diese insbesondere Mittel zur Durchführung der Verfahrensschritte umfasst.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht auf eine elektronische Datenbrille mit einer Anzeigeeinrichtung, mittels welcher unterschiedlichste Informationen in ein Sichtfeld eines Trägers der Datenbrille eingeblendet werden können; und in
- Fig. 2: eine schematische Darstellung der Anzeigeeinrichtung der Datenbrille, wobei mittels der Anzeigeeinrichtung ein Fadenkreuz angezeigt wird, welches dazu dient, dem Träger der Datenbrille zu ermöglichen, ein Objekt, welches außerhalb der Datenbrille angeordnet ist, auszuwählen.

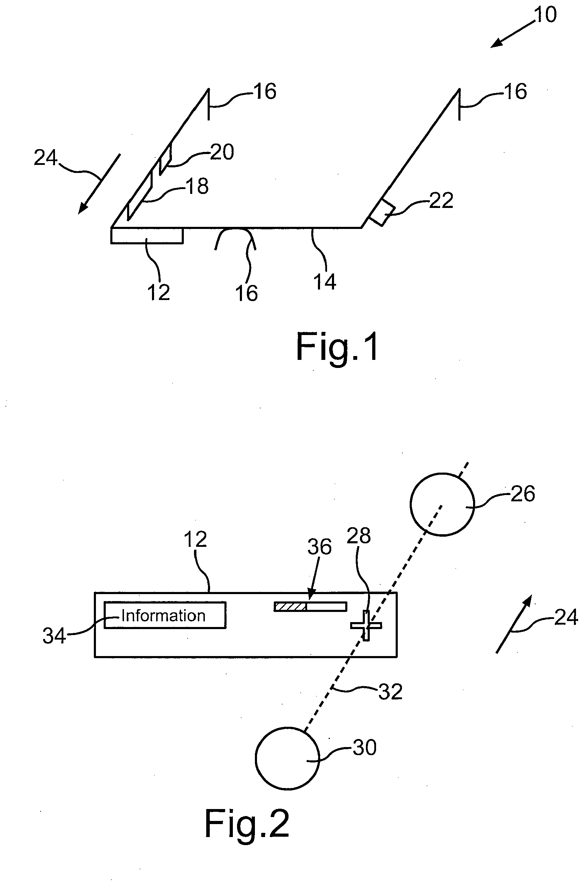

Eine elektronische Datenbrille 10 ist in einer schematischen Perspektivansicht in Fig. 1 gezeigt. Die elektronische Datenbrille 10 umfasst eine Anzeigeeinrichtung 12, welche an einem Rahmen 14 der Datenbrille 10 angeordnet ist. Im vorliegenden Fall umfasst die elektronische Datenbrille 10 eine Mehrzahl von Bügeln 16, mittels welchen ein Träger die Datenbrille 10 an seinen Ohren beziehungsweise an seinem Nasenbein fixieren kann.

Des Weiteren umfasst die Datenbrille 10 eine Erfassungseinrichtung 18 und eine Steuereinrichtung 20 sowie ein Bedienelement 22. Mit dem Pfeil 24 ist eine Beobachtungsrichtung eines Trägers der Datenbrille 10 gekennzeichnet.

Nachfolgend wird ein Verfahren zum Betreiben der elektronischen Datenbrille 10 näher erläutert. In Fig. 2 ist in einer schematischen Ansicht die Anzeigeeinrichtung 12 dargestellt. Mittels der Erfassungseinrichtung 18 wird erfasst, ob sich ein außenseitig von der Datenbrille 10 angeordnetes Objekt zumindest teilweise in Überdeckung mit einem mittels der Anzeigeeinrichtung 12 der Datenbrille 10 angezeigten Symbol 28 befindet. Bei dem Symbol 28 handelt es sich im vorliegenden Fall um eine Art Fadenkreuz, wobei das Symbol 28 auch in weiteren unterschiedlichsten Formgebungen angezeigt werden kann.

Mittels der Steuereinrichtung 20 wird das Objekt 26 ausgewählt, falls dieses sich zumindest teilweise in Überdeckung mit dem Symbol 28 befindet und zumindest eine vorbestimmte Bedingung erfüllt wird.

Das Objekt 26 wird dabei nur dann ausgewählt, falls eine vorbestimmte Aktion durch den Träger der Datenbrille 10 erfasst worden ist. Bei der vorbestimmten Aktion kann es sich beispielsweise um einen vorgegebenen Sprachbefehl handeln, welcher der Träger der Datenbrille 10 äußert, um das von ihm anvisierte Objekt 26 auszuwählen. Alternativ oder zusätzlich kann es sich bei der vorbestimmten Aktion auch um ein vorgegebenes Blinzelmuster und/oder um eine Betätigung des Bedienelements 22 handeln, wonach das entsprechend anvisierte Objekt 26 ausgewählt wird.

Alternativ ist es auch möglich, dass das Objekt 26 automatisch ausgewählt wird, wenn erfasst worden ist, dass sich das Objekt 26 für eine vorgegebene Überdeckungsdauer zumindest teilweise in Überdeckung mit dem Symbol 28 befunden hat. Die vorgegebene Überdeckungsdauer kann beispielsweise 1 Sekunde, 2 Sekunden oder dergleichen betragen. Mittels der Datenbrille 10 kann zudem angezeigt werden, ob zu dem Objekt 26 überhaupt irgendwelche Informationen vorliegen, beispielsweise in Form von Daten, welche in einer hier nicht dargestellten Speichereinrichtung der Datenbrille selbst abgespeichert sind oder in einer von der Datenbrille 10 verschiedenen Speichereinrichtung vorliegen, auf welche beispielsweise über eine Internetverbindung zugegriffen werden kann. Sollten entsprechende Informationen zu dem Objekt 26 vorliegen, kann dies beispielsweise durch eine entsprechende, hier nicht dargestellte Anzeige innerhalb der Anzeigeeinrichtung 12 kenntlich gemacht werden, so dass der Träger der Datenbrille 10 darauf hingewiesen wird, dass zu dem Objekt 26 überhaupt irgendwelche Informationen vorliegen. Ferner wird das Objekt 26 auch nur dann ausgewählt, falls zu dem Objekt 26 entsprechend vorbestimmte Informationen vorliegen.

Zur Erfassung, ob sich das Objekt 26 zumindest teilweise in Überdeckung mit dem Symbol 28 befindet, wird überprüft, ob ein innenseitig von der Datenbrille 10 vorgegebener Bereich 30, das Symbol 28 und das Objekt 26 entlang einer gemeinsamen Geraden 32 angeordnet sind. Bei dem vorgegebenen Bereich 30 kann es sich beispielsweise um ein Auge des Trägers der Datenbrille 10 handeln, so dass durch die Überprüfung, ob der vorgegebene Bereich 30, das Symbol 28 und das Objekt 26 entlang der Geraden 32 angeordnet sind, auf einfache Weise überprüft werden kann, ob der Träger der Datenbrille 10 das Objekt 26 gerade fokussiert.

Alternativ oder zusätzlich ist es auch möglich, dass zur Erfassung, ob sich das Objekt 26 zumindest teilweise in Überdeckung mit dem Symbol 28 befindet, überprüft wird, ob eine Blickrichtung des betreffenden Trägers der Datenbrille 10 sowohl auf das Symbol 28 als auch auf das Objekt 26 gerichtet ist.

Das Auswählen des Objekts 26 dient dazu, mittels der Datenbrille 10 dem Träger weiterführende Informationen über das Objekt 26 zukommen lassen zu können. Nachdem das Objekt 26 ausgewählt worden ist, wird zumindest eine vorbestimmte Information 34 mittels der Anzeigeeinrichtung 12 eingeblendet. Alternativ oder zusätzlich ist es auch möglich, dass diese vorbestimmte Information mittels der Datenbrille 10 über einen entsprechenden Lautsprecher akustisch wiedergegeben wird.

Die vorgebestimmte Information 34 wird dabei nur dann wiedergegeben, falls eine vorbestimmte Handlung des Trägers der Datenbrille 10 erfasst worden ist. Die vorbestimmte Handlung des Trägers kann dabei darin bestehen, dass dieser beispielsweise einen entsprechenden Sprachbefehl äußert, ein entsprechend vorgegebenes Blinzelmuster ausführt oder erneut das Bedienelement 22 betätigt.

Alternativ ist es auch möglich, dass die vorbestimmte Information 34 automatisch wiedergegeben wird, falls erfasst worden ist, dass sich das Objekt 26 nach dem Auswählen für mindestens eine vorgegebene Dauer zumindest teilweise in Überdeckung mit dem Symbol 28 befinden hat. Ein entsprechendes Verstreichen der vorgegebenen Dauer kann beispielsweise in Form einer Animation 36 mittels der Anzeigeeinrichtung 12 angezeigt werden. Sollte also das Objekt 26 bereits ausgewählt worden sein, füllt sich die balkenförmige Animation 36 mit zunehmender Dauer, wobei sobald die balkenförmige Animation 36 vollständig ausgefüllt ist, die vorgegebene Dauer verstrichen ist und die entsprechende Information 34 automatisch angezeigt wird.

Die vorbestimmte Information 34 wird dabei nur so lange angezeigt, wie erfasst wird, dass sich das Objekt 26 zumindest teilweise in Überdeckung mit dem Symbol 28 befindet. Dadurch wird verhindert, dass bei einer Blickabkehr von dem Objekt 26 weiterhin die Information 34 angezeigt wird, welche dann höchst wahrscheinlich für den Träger der Datenbrille 10 nicht mehr von Interesse ist.

Des Weiteren ist es möglich, dass, sobald das Objekt 26 ausgewählt worden ist, eine hier nicht dargestellte optische Hervorhebung in einem vorgegebenen Bereich der Anzeigeeinrichtung 12 angezeigt wird, so dass dem Träger der Datenbrille 10 auf deutliche Weise angezeigt wird, dass das betreffende Objekt 26 gerade von ihm beziehungsweise von der Datenbrille 10 ausgewählt worden ist.

Um eine Auswahl des Objekts 26 durch den Träger der Datenbrille 10 zu vereinfachen, kann die Datenbrille 10 eine Art Zoom-Funktion aufweisen, damit die Auswahl des Objekts 26 durch den Träger der Datenbrille 10 exakt erfolgen kann. Sobald erfasst wird, dass sich das Objekt 26 zumindest teilweise in Überdeckung mit dem Symbol 28 befindet, wird ein vorgegebener, das Objekt 26 umfassender Bereich mittels der Anzeigeeinrichtung 12 mit einem vorgegebenen Faktor vergrößert angezeigt. Beispielsweise kann diese partielle Vergrößerung, beziehungsweise das Heranzoomen erst dann erfolgen, falls der Träger der Datenbrille 10 einen entsprechenden Sprachbefehl oder eine anderweitige Aktion, wie beispielsweise eine Betätigung des Bedienelements 22 ausführt. Dieser partielle Zoom kann beispielsweise in Form eines Fischaugen-Effekts oder auch in Form eines normalen Zooms erfolgen, so dass der Träger der Datenbrille 10 mittels der Anzeigeeinrichtung 12 das Objekt 26 und einen umgebenden Bereich des Objekts 26 vergrößert dargestellt bekommt, beispielsweise so als ob der durch ein Fernglas schauen würde.

Bei dem Objekt 26 kann es sich dabei um unterschiedlichste Elemente, wie beispielsweise Gebäude, Fahrzeuge oder auch Menschen handeln. Beispielsweise ist es möglich, dass der Träger der Datenbrille 10 diese dazu verwendet, eine Wartung an einem Motor eines Kraftwagens vorzunehmen. Bei dem Objekt 26 kann es sich dann beispielsweise um entsprechende Komponenten des Motors handeln, welche er auf die zuvor beschriebene Weise auswählen und sich entsprechende Informationen dazu anzeigen lassen kann.

Auch ist es möglich, dass beispielsweise ein Arzt die Datenbrille 10 verwendet, um einen Patienten zu untersuchen, wobei er unterschiedlichste Körperregionen mittels der Datenbrille in zuvor erläuterter Weise auswählen und sich weitergehende Informationen anzeigen lassen kann.

Es ist auch möglich, dass ein Fahrer eines Kraftwagens die Datenbrille 10 trägt und die Datenbrille 10 in oben beschriebener Weise nutzt, um unterschiedlichste Gebäude, andere Verkehrsteilnehmer oder dergleichen auszuwählen und sich Informationen über diese mittels der Datenbrille 10 ausgeben zu lassen.

Die Datenbrille 10 kann also im Wesentlichen für beliebige Anwendungsbereiche genutzt werden, bei welchem irgendwelche Objekte von einem Träger der Datenbrille 10 ausgewählt werden, um sich - falls gewünscht - weiterführende Informationen über die gerade ausgewählten Objekt anzeigen zu lassen..

## Patentansprüche

1. Verfahren zum Betreiben einer elektronischen Datenbrille (10), mit den Schritten:
- Erfassen, ob sich ein außenseitig von der Datenbrille (10) angeordnetes Objekt (26) zumindest teilweise in Überdeckung mit einem mittels einer Anzeigeeinrichtung (12) der Datenbrille (10) angezeigten Symbol (28) befindet;
- Auswählen des Objekts (26), falls dieses sich zumindest teilweise in Überdeckung mit dem Symbol (28) befindet und zumindest eine vorbestimmte Bedingung erfüllt wird;
**dadurch gekennzeichnet, dass**
zur Erfassung, ob sich das Objekt (26) zumindest teilweise in Überdeckung mit dem Symbol (28) befindet, überprüft wird, ob eine Blickrichtung eines Trägers der Datenbrille (10) sowohl auf das Symbol (28) als auch auf das Objekt (26) gerichtet ist.

2. Verfahren nach Anspruch 1,
**dadurch gekennzeichnet, dass**
das Objekt (26) nur dann ausgewählt wird, falls eine vorbestimme Aktion durch einen Träger der Datenbrille (10) erfasst worden ist.

3. Verfahren nach Anspruch 2,
**dadurch gekennzeichnet, dass**
die vorbestimmte Aktion ein vorgegebener Sprachbefehl, ein vorgegebenes Blinzelmuster und/oder eine Betätigung eines vorgegebenen Bedienelements (22) ist.

4. Verfahren nach Anspruch 1,
**dadurch gekennzeichnet, dass**
das Objekt (26) automatisch ausgewählt wird, wenn erfasst worden ist, dass sich das Objekt (26) für eine vorgegebene Überdeckungsdauer zumindest teilweise in Überdeckung mit dem Symbol (28) befunden hat.

5. Verfahren nach einem der vorgehenden Ansprüche,
**dadurch gekennzeichnet, dass**
zur Erfassung, ob sich das Objekt (26) zumindest teilweise in Überdeckung mit dem Symbol (28) befindet, überprüft wird, ob ein innenseitig von der Datenbrille (10) vorgegebener Bereich (30), das Symbol (28) und das Objekt (26) entlang einer gemeinsamen Geraden (32) angeordnet sind.

6. Verfahren nach einem der vorhergehenden Ansprüche,
**dadurch gekennzeichnet, dass**
nachdem das Objekt (26) ausgewählt worden ist, eine vorbestimmte Information (34) zu dem ausgewählten Objekt (26) optisch und/oder akustisch wiedergegeben wird.

7. Verfahren nach Anspruch 6,
**dadurch gekennzeichnet, dass**
die vorbestimmte Information (34) nur dann wiedergegeben wird, falls eine vorbestimmte Handlung des Trägers der Datenbrille (10) erfasst worden ist.

8. Verfahren nach Anspruch 6,
**dadurch gekennzeichnet, dass**
die vorbestimmte Information (34) automatisch wiedergegeben wird, falls erfasst worden ist, dass sich das Objekt (26) nach dem Auswählen für mindestens eine vorgegebene Dauer zumindest teilweise in Überdeckung mit dem Symbol (28) befunden hat.

9. Verfahren nach Anspruch 8,
**dadurch gekennzeichnet, dass**
ein Verstreichen der vorgegebenen Dauer in Form einer Animation (36) mittels der Anzeigeeinrichtung (12) angezeigt wird.

10. Verfahren nach einem der Ansprüche 6 bis 9,
**dadurch gekennzeichnet, dass**
die vorbestimmte Information (34) nur so lange angezeigt wird, wie erfasst wird, dass sich das Objekt (26) zumindest teilweise in Überdeckung mit dem Symbol (28) befindet.

11. Verfahren nach einem der vorhergehenden Ansprüche,
**dadurch gekennzeichnet, dass**
das Objekt (26) nur dann ausgewählt wird, falls zu dem Objekt (26) vorbestimmte Informationen vorliegen.

12. Verfahren nach einem der vorhergehenden Ansprüche,
**dadurch gekennzeichnet, dass**
sobald das Objekt (26) ausgewählt worden ist, eine optische Hervorhebung in einem vorgegebenen Bereich der Anzeigeeinrichtung (12) angezeigt wird.

13. Verfahren nach einem der vorhergehenden Ansprüche,
**dadurch gekennzeichnet, dass**
sobald erfasst wird, dass sich das Objekt (26) zumindest teilweise in Überdeckung mit dem Symbol (28) befindet, ein vorgegebener, das Objekt (26) umfassender Bereich mittels der Anzeigeeinrichtung (12) mit einem vorgegebenen Faktor vergrößert angezeigt wird.

14. Elektronische Datenbrille (10) mit
- einer Erfassungseinrichtung (18), welche dazu ausgelegt ist, zu erfassen, ob sich ein außenseitig von der Datenbrille (10) angeordnetes Objekt (26) zumindest teilweise in Überdeckung mit einem mittels einer Anzeigeeinrichtung (12) der Datenbrille (10) angezeigten Symbol (28) befindet;
- einer Steuereinrichtung (20), welche dazu ausgelegt ist, das Objekt (26) auszuwählen, falls dieses sich zumindest teilweise in Überdeckung mit dem Symbol (28) befindet und zumindest eine vorbestimmte Bedingung erfüllt wird;
**dadurch gekennzeichnet, dass**
die Steuereinrichtung (20) dazu ausgelegt ist, zur Erfassung, ob sich das Objekt (26) zumindest teilweise in Überdeckung mit dem Symbol (28) befindet, zu überprüfen, ob eine Blickrichtung eines Trägers der Datenbrille (10) sowohl auf das Symbol (28) als auch auf das Objekt (26) gerichtet ist.

## Claims

1. A method for operating electronic data glasses (10), comprising the following steps:
- detecting whether an object (26) disposed outside of the data glasses (10) is at least partially lined up with a symbol (28) displayed by the display device (12) of the data glasses (10);
- selecting the object (26) if the object is at least partially lined up with the symbol (28) and at least one predetermined condition is satisfied;
**characterised in that**
to detect whether the object (26) is at least partially lined up with the symbol (28), a check is carried out to determine whether a line of vision of the wearer of the data glasses (10) is aligned with both the symbol (28) and the object (26).

2. Method according to Claim 1,
**characterised in that**
the object (26) is selected only if a predetermined action by the wearer of the data glasses (10) has been detected.

3. Method according to Claim 2,
**characterised in that**
the predetermined action is a predefined voice command, a predefined blinking pattern and/or an actuation of a predefined operating element (22).

4. Method according to Claim 1,
**characterised in that**
the object (26) is selected automatically if it has been detected that the object (26) was at least partially lined up with the symbol (28) for a predefined alignment period.

5. Method according to any one of the preceding claims,
**characterised in that**
in order to detect whether the object (26) is at least partially lined up with the symbol (28), a check is carried out to determine whether an area (30) predefined on the inside of the data glasses (10), the symbol (28) and the object (26) are all disposed along a common straight line (32).

6. Method according to any one of the preceding claims,
**characterised in that**
once the object (26) has been selected, predetermined information (34) relating to the selected object (26) is reproduced visually and/or audibly.

7. Method according to Claim 6,
**characterised in that**
the predetermined information (34) is only reproduced if a predetermined action by the wearer of the data glasses (10) has been detected.

8. Method according to Claim 6,
**characterised in that**
the predetermined information (34) is automatically reproduced if it has been detected that, after selection, the object (26) was at least partially lined up with the symbol (28) for at least a predetermined period.

9. Method according to Claim 8,
**characterised in that**
an expiry of the predefined period is indicated by the display device (12) as an animation (36).

10. Method according to Claims 6 to 9,
**characterised in that**
the predetermined information (34) is displayed only for as long as it is detected that the object (26) is at least partially lined up with the symbol (28).

11. Method according to any one of the preceding claims,
**characterised in that**
the object (26) is selected only if predetermined information is present for the object (26).

12. Method according to any one of the preceding claims,
**characterised in that**
as soon as the object (26) has been selected, a visual highlighting is displayed in a predefined area of the display device (12).

13. Method according to any one of the preceding claims,
**characterised in that**
as soon as it is detected that the object (26) is at least partially lined up with the symbol (28), a predefined area encompassing the object (26) is displayed by the display device (12), magnified by a predefined factor.

14. Electronic data glasses (10) comprising:
- a detection device (18) which is designed to detect whether an object (26) arranged outside of the data glasses (10) is at least partially lined up with a symbol (28) displayed by the display device (12) of the data glasses (10);
- a control device (20) which is designed to select the object (26) if the object is at least partially lined up with the symbol (28) and at least one predetermined condition is satisfied;
**characterised in that**
the control device (20) is designed to detect whether the object (26) is at least partially lined up with the symbol (28), to check whether a line of vision of the wearer of the data glasses (10) is aligned with both the symbol (28) and the object (26).

## Revendications

1. Procédé de fonctionnement de lunettes électroniques intelligentes (10), avec les étapes :
- détection pour savoir si un objet (26) placé à l'extérieur des lunettes intelligentes (10) se trouve au moins en partie en recouvrement avec un symbole (28) affiché au moyen d'un dispositif d'affichage (12) des lunettes intelligentes (10) ;
- sélection de l'objet (26), si celui-ci se trouve au moins en partie en recouvrement avec le symbole (28) et satisfait au moins une condition prescrite ;
**caractérisé en ce que**, pour la détection pour savoir si l'objet (26) se trouve au moins en partie en recouvrement avec le symbole (28), on vérifie si la direction de regard d'une personne portant les lunettes intelligentes (10) est orientée aussi bien sur le symbole (28) que sur l'objet (26).

2. Procédé selon la revendication 1, **caractérisé en ce que** l'objet (26) n'est sélectionné que si une action prédéterminée de la personne portant les lunettes intelligentes (10) a été détectée.

3. Procédé selon la revendication 2, **caractérisé en ce que** l'action prédéterminée est un ordre vocal prédéterminé, un clignement d'yeux prédéterminé et/ou un actionnement d'un élément de commande (22) prédéterminé.

4. Procédé selon la revendication 1, **caractérisé en ce que** l'objet (26) est sélectionné automatiquement, si on a détecté que l'objet (26) s'est trouvé au moins en partie en recouvrement avec le symbole (28) pendant une durée de recouvrement prédéterminée.

5. Procédé selon l'une des revendications précédentes, **caractérisé en ce que**, pour détecter si l'objet (26) se trouve au moins en partie en recouvrement avec le symbole (28), on vérifie si une zone (30) prédéterminée à l'intérieur des lunettes intelligentes (10), le symbole (28) et l'objet (26) sont agencés le long d'une droite commune (32).

6. Procédé selon l'une des revendications précédentes, **caractérisé en ce que**, après que l'objet (26) a été sélectionné, une information prédéterminée (34) concernant l'objet (26) sélectionné est reproduite sous forme optique et/ou acoustique.

7. Procédé selon la revendication 6, **caractérisé en ce que** l'information prédéterminée (34) n'est reproduite que si une action prédéterminée de la personne portant les lunettes intelligentes (10) a été détectée.

8. Procédé selon la revendication 6, **caractérisé en ce que** l'information prédéterminée (34) est reproduite automatiquement si on a détecté que, après la sélection, l'objet (26) s'est trouvé au moins en partie en recouvrement avec le symbole (28) pendant au moins une durée prédéterminée.

9. Procédé selon la revendication 8, **caractérisé en ce que** l'écoulement de la durée prédéterminée est affiché au moyen du dispositif d'affichage (12) sous la forme d'une animation (36).

10. Procédé selon l'une des revendications 6 à 9, **caractérisé en ce que** l'information prédéterminée (34) n'est affichée que tant que l'on détecte que l'objet (26) se trouve au moins en partie en recouvrement avec le symbole (28).

11. Procédé selon l'une des revendications précédentes, **caractérisé en ce que** l'objet (26) n'est sélectionné que s'il existe des informations prédéterminées concernant l'objet (26).

12. Procédé selon l'une des revendications précédentes, **caractérisé en ce que**, dès que l'objet (26) a été sélectionné, une mise en valeur optique est affichée dans une zone prédéterminée du dispositif d'affichage (12).

13. Procédé selon l'une des revendications précédentes, **caractérisé en ce que**, dès que l'on a détecté que l'objet (26) se trouve au moins en partie en recouvrement avec le symbole (28), une zone prédéterminée comprenant l'objet (26) est affichée sous une forme agrandie avec un facteur prédéterminé au moyen du dispositif d'affichage (12).

14. Lunettes intelligentes électroniques (10) avec
- un dispositif de détection (18), qui est conçu pour détecter si un objet (26) placé à l'extérieur des lunettes intelligentes (10) se trouve au moins en partie en recouvrement avec un symbole (28) affiché au moyen d'un dispositif d'affichage (12) des lunettes intelligentes (10) ;
- un dispositif de commande (20), qui est conçu pour sélectionner l'objet (26), si celui-ci se trouve au moins en partie en recouvrement avec le symbole (28) et si au moins une condition prescrite est satisfaite ;
**caractérisé en ce que** le dispositif de commande (20) est conçu, afin de détecter si l'objet (26) se trouve au moins en partie en recouvrement avec le symbole (28), pour vérifier si la direction de regard d'une personne portant les lunettes intelligentes (10) est orientée aussi bien sur le symbole (28) que sur l'objet (26).
